# EUROPEAN PATENT APPLICATION

(11) **EP 4 610 749 A1**
(43) Date of publication of application: **03.09.2025**
(21) Application number: 24160542.7
(22) Date of filing: 29.02.2024
(51) Int. Cl.: G05B 19/04, G06F 13/40, G05B 19/042

(54) **I/O STATION STORING DIAGNOSTICS DATA**

(71) Applicant: ABB SCHWEIZ AG, 5400 Baden (CH)
(72) Inventor: NORBERG, Robert, 632 23 Eskilstuna (SE); POOK, Stefan, 32423 Minden (DE); ÅSLUND, Jörgen, 725 96 Västerås (SE); VIERO, Enrico, 722 14 Västerås (SE); HANSSON, Ulf, 722 10 Västerås (SE)
(74) Representative: Kransell & Wennborg KB

(57) **Abstract**

The present disclosure relates to an I/O station (10), connected with a plurality of network devices in an automation system. The I/O station comprises a plurality of I/O modules (12), each I/O module providing one or more I/O channels (20), each I/O channel connecting a respective field device (21). The I/O station also comprises an I/O network interface (11) for forwarding data between the I/O modules (12) and the network devices via a network (3). The I/O station also comprises a data storage (22) storing a set of diagnostics data, the set comprising a plurality of entries of diagnostics data, each entry relating to performance of the automation system. The I/O station is operative to, in response to a request from anyone of the network devices, send the stored set of diagnostics data to the requesting network device.

## Description

### TECHNICAL FIELD

The present disclosure relates to an input-output (I/O) station, connected with a plurality of network devices in an industrial automation system.

### BACKGROUND

An I/O station, also called I/O system, is used in an industrial automation system for connecting field devices, such as sensors, actuators or the like in an industrial plant to controllers of the plant. The I/O station typically comprises a Fieldbus Communication Interface (FCI) and I/O modules connecting the field devices, where the FCI interface is arranged for forwarding data between the modules and the controllers, via fieldbus or fieldbus network. Since the controllers are digital while at least some of the field devices may be analog legacy devices (e.g. requiring a 4-20 mA signal), the I/O station may convert analogue signals to digital and *vice versa.* Each of the I/O modules may be any of a digital-in (DI) module, digital-out (DO) module, analog-in (AI) module or analog-out (AO) module, or a combination thereof, or configurable as in/out analog or configurable as in/out digital or configurable as in/out analog/digital.

Diagnostics related to wiring or field devices are present in many automation systems today. In most cases this diagnostics is interrupt driven on the fieldbus. If an I/O module has something to report, it informs the controller that it holds diagnostics and the controller goes out and fetches this data, normally via acyclic services. The controller will then distribute this diagnostics information to alarm and event list of the HMI and the engineering tool.

Modern automation systems are getting more accessible due to introduction of I/O networks and there is an increasing market need for more service and asset management tools/applications collecting data including diagnostics for preventive maintenance and other purposes. A normal solution today is that these tools pick up the data and diagnostics indirectly via the alarm and event lists and engineering tools.

### SUMMARY

It is an objective of the present invention to provide an improved I/O station which can provide diagnostics data to the network.

According to an aspect of the present invention, there is provided an I/O station, connected with a plurality of network devices in an automation system. The I/O station comprises a plurality of I/O modules, each I/O module providing one or more I/O channels, each I/O channel connecting a respective field device. The I/O station also comprises an I/O network interface for forwarding data between the I/O modules and the network devices via a network (3). The I/O station also comprises a data storage storing a set of diagnostics data, the set comprising a plurality of entries of diagnostics data, each entry relating to performance of the automation system. The I/O station is operative to, in response to a request from anyone of the network devices, send the stored set of diagnostics data to the requesting network device. Embodiments of the I/O station of the present disclosure may be configured to perform an embodiment of the method of the present disclosure.

According to another aspect of the present invention, there is provided an automation system comprising a plurality of network devices, a plurality of the I/O stations of the present disclosure, and the network via which the I/O stations are communicatively connected to the network devices.

According to another aspect of the present invention, there is provided a method performed by an embodiment of the I/O station of the present disclosure. The method comprises obtaining diagnostics data relating to performance of the automation system. The method also comprises storing the obtained diagnostics data as an entry in the set of diagnostics data in the data storage. The method also comprises, from one of the network devices, receiving a request for the set of diagnostics data. The method also comprises, in response to the received request, sending the set of diagnostics data, including the stored entry, to said one of the network devices.

According to another aspect of the present invention, there is provided a computer program product comprising computer-executable components for causing an I/O station to perform an embodiment of the method of the present disclosure when the computer-executable components are run on processing circuitry comprised in the I/O station.

By the I/O station storing a set of diagnostics data, the I/O station can provide the whole set of diagnostics data to a network device in response to a request from said network device. Thus, collection of diagnostics data does not have to be only interrupt driven. The I/O station may also hold a local copy of all diagnostics and information related to the I/O station, wiring and field devices. This local copy may then be collected by any network device (including service and asset management tools/applications) directly from the I/O station, e.g. via specific fieldbus commands. This leads to easier access to data and diagnostics in the automation system.

It is to be noted that any feature of any of the aspects may be applied to any other aspect, wherever appropriate. Likewise, any advantage of any of the aspects may apply to any of the other aspects. Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated. The use of "first", "second" etc. for different features/components of the present disclosure are only intended to distinguish the features/components from other similar features/components and not to impart any order or hierarchy to the features/components.

### BRIEF DESCRIPTION OF THE DRAWINGS

Embodiments will be described, by way of example, with reference to the accompanying drawings, in which:
Fig 1 is a schematic block diagram of an automation system, in accordance with some embodiments of the present invention.
Fig 2 is a schematic block diagram of an I/O station, in accordance with some embodiments of the present invention.
Fig 3 is a schematic block diagram of an I/O station comprising processing circuitry and a data storage, in accordance with some embodiments of the present invention.
Fig 4 is a schematic circuit diagram of an I/O module, in accordance with some embodiments of the present invention.
Fig 5 is a schematic flow chart of some embodiments of the method of the present invention.

### DETAILED DESCRIPTION

Embodiments will now be described more fully hereinafter with reference to the accompanying drawings, in which certain embodiments are shown. However, other embodiments in many different forms are possible within the scope of the present disclosure. Rather, the following embodiments are provided by way of example so that this disclosure will be thorough and complete, and will fully convey the scope of the disclosure to those skilled in the art. Like numbers refer to like elements throughout the description.

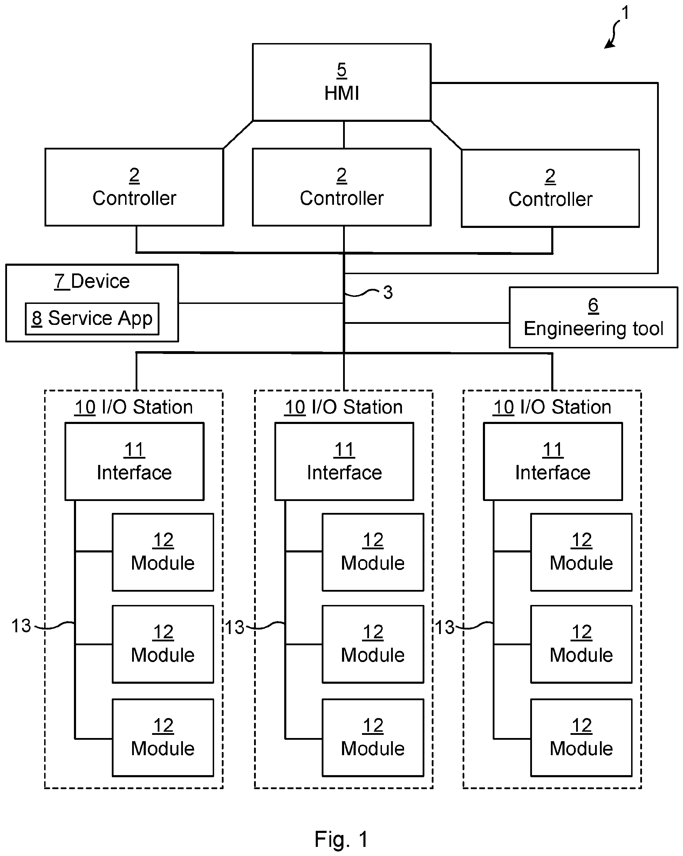

Figure 1 illustrates an automation system 1 comprising a plurality of I/O stations 10. An I/O station may be embedded hardware and software that, for inputs converts the physical signal from the process running in the plant (either directly from the process or via a field device) to digital values, and for outputs converts digital values into physical signals for the process (either directly to the process or via a field device). The I/O stations 10 are connected with a plurality of network devices via a network 3. The network may comprise one or more fieldbus(es). The network 3 may be configured for communication in accordance with any fieldbus protocol, e.g. an OPC Unified Architecture, OPC UA, or a Process Field Network, PROFINET, communication protocol, preferably OPC UA.

The network devices may comprise any of one or more controller(s) 2, Human-Machine Interface(s) (HMI) 5, engineering tool(s) 6 and/or any other device 7 (typically processing device) running an application (e.g. a service application) e.g. for asset management in the plant comprising the automation system 1. For instance, the network devices connected in the network 3 may comprise a plurality of controller(s) 2, one or more, e.g. only one, HMI 5 and/or one or more, e.g. only one, engineering tool 6. A controller 2 may be embedded hardware and software that executes a real-time plant process specific application that e.g. reads signals from the I/O stations 10, writes signals to the I/O stations 10 and/or receives commands from an HMI 5. An HMI 5 may convene to an operator the status of the process based on reading data from the controller(s) 2 and/or the I/O stations 10. The HMI 5 may additionally command a controller 2 to start an action. An engineering tool 6 may configure the binding and conversion of I/O channels of an I/O station 10 and/or the application in a controller 2. The engineering tool 6 may execute on a PC where activities are not time critical.

In the example of figure 1, there are three I/O stations 10 and three controllers 2. However, there need not be a one-to-one relationship between the number of I/O stations and the number of controllers and any one of the controllers may connect with any of the I/O channels in any of the I/O stations. In some embodiments, at least one of the network devices 2, 5, 7 and/or 6, e.g. at least one controller 2, may be communicatively connected (i.e. connected such that it is able to communicate, e.g. wirelessly or non-wirelessly) with I/O channels of at least two of the I/O stations 10.

In the example of figure 1, the controllers 2 are connected between the I/O stations 10 and the HMI 5. In other examples, the HMI 5 may be connected directly to the stations 10, without being connected via a controller. Also other topologies are possible. The engineering tool 6 may be connected to any or all of the I/O stations 10, and/or to any of the controllers 2, e.g. via the network 3. Typically, the engineering tool 6 is only connected when needed, but in some embodiments it may be permanently connected.

Each of the I/O stations 10 comprises a plurality of I/O modules 12 which are interfaced with the network 3 via an I/O network interface 11. The modules 12 may be connected to the network interface 11 via one or more I/O bus(es) 13 within the station 10, and/or there may be point-to-point connections between the modules 12 and network interface 11.

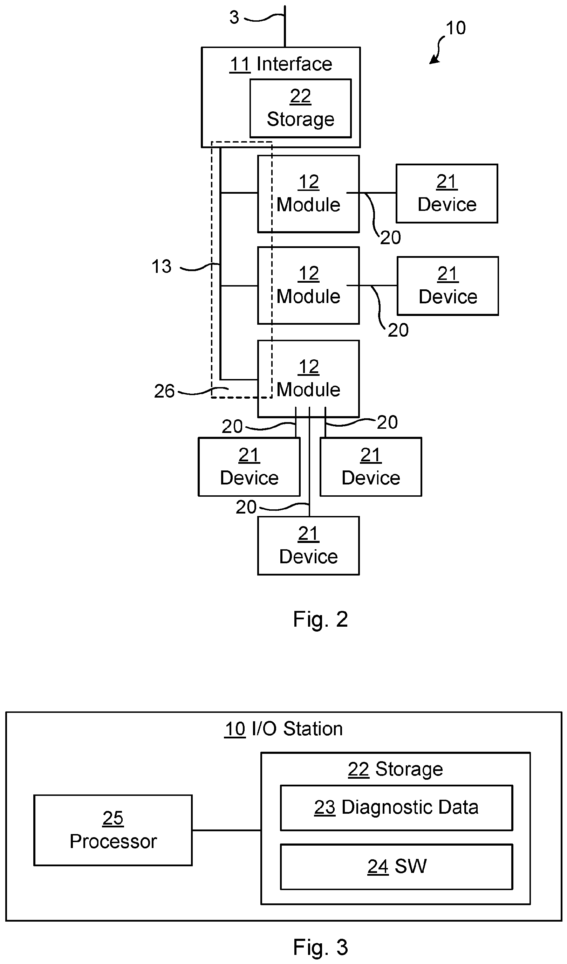

Figure 2 illustrates an I/O station 10, e.g. one of the stations 10 in figure 1, connecting a plurality of field devices 21. Each I/O module 12 provides one or more I/O channel(s) 20, where each channel 20 can connect a respective field device 21 (i.e. one field device per channel and one channel per field device). In an example, one of the I/O modules 12 provides only one channel 20 and may thus be able to connect only one field device 21. In another example, one of the I/O modules 12 provides 16 channels 20, enabling the module to connect up to 16 field devices 21. There maybe unused channels 20 (i.e. channels to which no field device is connected), but each of the channels 20 which connects a field device 21 is communicatively connected to at least one of the network devices, e.g. one or more controllers 2, via the network interface 11 and the network 3.

The modules 12 and/or the network interface 11 may be mechanically connected to one or more baseplate(s) 26 within the station 10. In some embodiment a single baseplate 26 provides slots for mechanically connecting the modules 12 and the network interface 11. In other embodiments, that functionality is provided by a plurality of modular baseplates 26, one of which providing a slot for mechanically connecting the network interface 11.

The station 10 comprises a data storage 22, typically a non-volatile data storage or a combination of volatile and non-volatile data storage, storing a set of diagnostics data. Typically, the set of diagnostics data comprises a plurality of entries of diagnostics data, each entry relating to performance of the automation system 1, typically to a part of the automation system 1 associated with the I/O station 10 comprising the data storage 22, e.g. to performance of the I/O network interface 11 comprised in the I/O station, of one of the field devices 21 connected to the I/O station, of one of the I/O modules 12 comprised in the I/O station or of one of the I/O channels 20, e.g. wiring thereof, provided by an I/O module comprised in the I/O station. In some embodiments, at least a part of the storage 22 (e.g. holding at least one of the entries in the set of set of diagnostics data 23) is comprised in the network interface 11. In some embodiments, at least part of the storage 22 (e.g. holding at least one of the entries in the set of set of diagnostics data 23) is comprised in the baseplate 26, e.g. in a baseplate mechanically connecting the network interface 11. In some embodiments, at least part of the storage 22 (e.g. holding at least one of the entries in the set of set of diagnostics data 23) is comprised in at least one of the I/O modules 12. For instance, the data storage 22 may comprise non-volatile storage in the network interface 11 or base plate 26, as well as volatile and/or non-volatile storage in each of the I/O modules 12.

Figure 3 schematically illustrates an embodiment of an I/O station 10 of the present disclosure. The I/O station 10 comprises processing circuitry 25 e.g. a central processing unit (CPU). The processing circuitry 25 may comprise one or a plurality of processing units in the form of microprocessor(s). However, other suitable devices with computing capabilities could be comprised in the processing circuitry 25, e.g. an application specific integrated circuit (ASIC), a field programmable gate array (FPGA), System on Chip (SoC) or a complex programmable logic device (CPLD). The processing circuitry 25 is configured to run one or several computer program(s) or software (SW) 24 stored in a storage 22 of one or several storage unit(s) e.g. a memory. The storage unit is regarded as a computer readable means 22, forming a computer program product together with the SW 24 stored thereon as computer-executable components, and may e.g. fully or partly be in the form of a Random Access Memory (RAM), a Flash memory or other solid state memory, or a hard disk, or be a combination thereof. The processing circuitry 25 may also be configured to store data in the storage 22, as needed. The data storage 22 also comprises, i.e. holds, the set of diagnostics data 23 discussed herein.

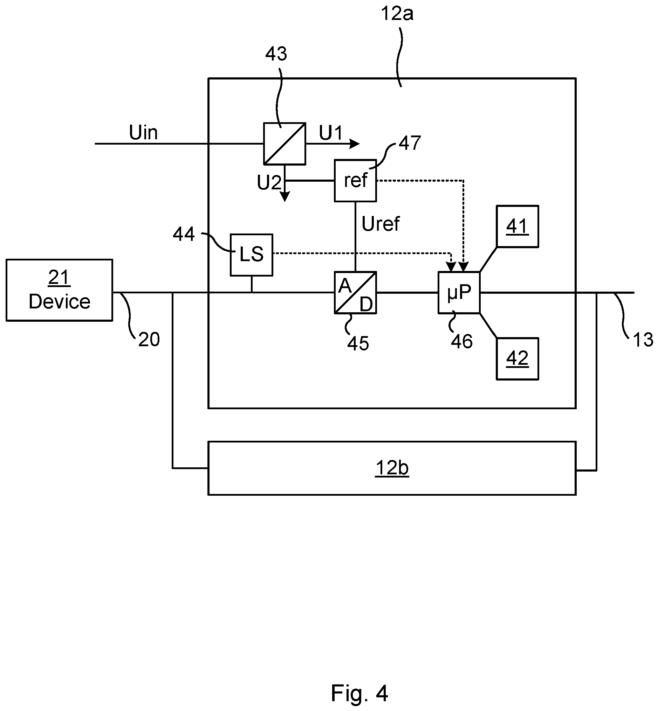

Figure 4 illustrates a first I/O module 12a providing at least one I/O channel 20 to a respective field device 21. For redundancy, a second I/O module 12b may provide an I/O channel 20 to the same field device 21. For instance, in case the first I/O module 12a breaks, the second I/O module 12b can take over. The baseplate 26 may route the wiring of the channel 20 to both modules 12a and 12b.

The I/O module 12a, or each of the I/O modules 12, may comprise at least a part of the storage 22, e.g. holding at least one of the entries in the set of set of diagnostics data 23 in said module. The storage 22 in the module 12 may comprise or consist of at least one non-volatile storage (e.g. memory) 41 and/or at least one volatile storage (e.g. memory) 42. A microprocessor (µP) or other processing circuitry 46 of the module 12 may be configured to store entries in the set of diagnostics data said non-volatile memory 41 and/or volatile memory 42 in the module 12. Entries stored in parts 41 and/or 42 of the data storage 22 in the module 12 may then be communicated via e.g. the I/O bus 13 for sending the stored set of diagnostics data 23 to a requesting network device.

Examples of diagnostics data 23 which may be stored as entries of the set in the data storage 22 are schematically illustrated in figure 4. For instance, a line sensor 44 may monitor the performance (e.g. health) of the channel 20 of the field device 21, e.g. of the channel 20 between the field device 21 and an Analog-to-Digital (A/D) converter 45 in the module 12. If it is determined that the channel is not adequately operational, e.g. due to a cable break, the LS 44 may send a sensor signal to the microprocessor 46, said sensor signal including information about the channel performance, and the microprocessor may then save diagnostics data relating to the channel performance as an entry of the set of diagnostics data in the data storage 22, e.g. in the non-volatile storage 41 or the volatile storage 42, preferably the volatile storage 42 which may be more suited for storing real-time diagnostics data such as from the LS 44.

Another example relates to monitoring of a reference voltage Uref (e.g. 2 V) by a reference generator 47 to an A/D converter 45. A transformer 43 is used for transforming an incoming voltage Uin fed to the module 12 (e.g. 24 V) to internal voltages U1 and U2 (e.g. 5 V and 12 V, respectively) used within the module 12. In the example of figure 4, the reference generator 47 is fed U2 and generates Uref which is provided to the A/D converter 45. A sensor may monitor the operation of the reference generator 47, e.g. monitor that the reference voltage Uref is correct and stable, and may send a sensor signal to the microprocessor 46, said sensor signal including information about the performance of the reference generator 47, and the microprocessor may then save diagnostics data relating to said performance as an entry of the set of diagnostics data in the data storage 22, e.g. in the non-volatile storage 41 or the volatile storage 42, preferably the volatile storage 42 which may be more suited for storing real-time diagnostics data.

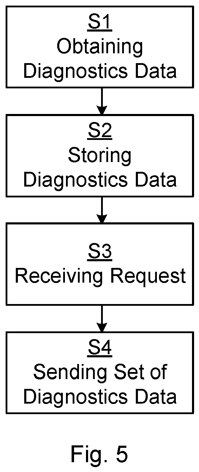

Figure 5 is a schematic flow chart illustrating some embodiments of a method of the present invention. The method is performed by an I/O station 10, e.g. as discussed herein. The method comprises obtaining S1 diagnostics data 23, e.g. relating to performance of one of the field devices 21, one of the I/O modules 12 or one of the I/O channels 20. The method also comprises storing S2 the obtained S1 diagnostics data as an entry in the set of diagnostics data 23 in the data storage 22. Typically, the entry being stored (i.e. saved) may replace a corresponding older entry in the set. Thus, the set of diagnostics data is always up to date with the latest available diagnostics data and space is not taken up by out of date diagnostics data. As discussed herein, the data storage 22 may comprise several different parts in different parts of the I/O station 10, and may comprise volatile and/or non-volatile parts 42 and/or 41. The method also comprises receiving S3, from one of the network devices, a request for the set of diagnostics data 23. The method also comprises sending S4, in response to the received S3 request, the set of diagnostics data 23, including the stored S2 entry, to said one of the network devices. The set may for instance be sent S4 in a message addressed to the requesting network device, i.e. not broadcast. For instance, the network device may send a specific commando, corresponding to "send all diagnostics", whereby the I/O station 10, in response thereto, sends the whole set of entries to said network device. This is in contrast with situations of prior art where the I/O station sends only specific fault information on its own volition when a fault is detected.

In some embodiments of the present invention, the diagnostics data which is stored S2 as the entry in the set of diagnostics data 23 replaces previously stored diagnostics data in the set, thus updating the set of diagnostics data. The replaced entry, including the diagnostics data of said replaced entry, may typically be automatically deleted from the storage 22 as part of the storing (i.e. saving) S2 of the new entry of diagnostics data.

In some embodiments of the present invention, the storing S2 of the entry comprises associating a time stamp with the stored entry, the timestamp indicating a time when the diagnostics data of the entry was obtained S1. Thus, at least one of the entries in the set of diagnostics data 23, e.g. each of some or all of the entries in the set of diagnostics data, is stored (i.e. held) in the storage 22 in association with a respective timestamp indicating a time when the diagnostics data of the entry was obtained. Having respective timestamps associated with the entries enable analysis of the chain of events resulting in the diagnostics data in the set. Thus it may be possible to determine from the diagnostics data in the set in which order different things happened/is happening in the I/O station 10, possibly enabling determining causality.

In some embodiments of the present invention, at least one of the entries in the stored set of diagnostics data 23 relates to a condition of one of the I/O modules 12 before shutdown of said I/O module, e.g. due to detection of an internal error in the module. Such an entry may e.g. be stored in a non-volatile storage 41 in said module 12. By means of such an entry with diagnostic data relating to a condition of the module before shutdown, analysis to determine the cause of the shutdown may be facilitated. This could be regarded as a post mortem analysis. Thus, in case of an unscheduled shutdown, or other irregularity, of the module, diagnostic data relating to the condition of the module just before the shutdown/irregularity may be stored as an entry in the set of diagnostics data.

In some embodiments of the present invention, the I/O station 10, e.g. the I/O network interface 11, is configured to send the stored set of diagnostics data 23 via the network 3 in accordance with an OPC UA or PROFINET communication protocol. Similarly, it may be convenient to store the diagnostics data in the data storage 22 in a format which is compatible with the OPC UA or PROFINET communication protocol.

The present disclosure has mainly been described above with reference to a few embodiments. However, as is readily appreciated by a person skilled in the art, other embodiments than the ones disclosed above are equally possible within the scope of the present disclosure, as defined by the appended claims.

## Claims

1. An input-output, I/O, station (10), connected with a plurality of network devices (2, 5, 6) in an automation system (1), the I/O station comprising:
a plurality of I/O modules (12), each I/O module providing one or more I/O channels (20), each I/O channel connecting a respective field device (21); and
an I/O network interface (11) for forwarding data between the I/O modules (12) and the network devices via a network (3); and
a data storage (22) storing a set of diagnostics data (23), the set comprising a plurality of entries of diagnostics data, each entry relating to performance of the automation system (1);
wherein the I/O station is operative to, in response to a request from anyone of the network devices (2, 5, 6), send the stored set of diagnostics data (23) to the requesting network device.

2. The I/O station of claim 1, wherein each of the entries relating to performance of the automation system (1) relates to performance of the network interface (11), one of the field devices (21), one of the I/O modules (12) or one of the I/O channels (20) of the I/O station (10).

3. The I/O station of any preceding claim, wherein each of some or all of the entries in the stored set of diagnostics data (23) is stored in association with a respective timestamp indicating a time when the diagnostics data of the entry was obtained.

4. The I/O station of any preceding claim, wherein at least one of the entries in the stored set of diagnostics data (23) relates to a condition of one of the I/O modules before shutdown of said I/O module.

5. The I/O station of any preceding claim, wherein the data storage (22) is comprised in the I/O network interface (11) and/or in one or more of the I/O modules (12) and/or in a baseplate (26) providing a slot to which the I/O network interface and/or I/O module is mechanically connected in the I/O station.

6. The I/O station of any preceding claim, wherein the network devices include any of: one or more controller(s) (2), one or more human-machine interface(s) (5) and one or more engineering tool(s) (6), and any other device, e.g. a device running a service application, connected to the network (3).

7. The I/O station of any preceding claim, wherein the I/O station (10), e.g. the I/O network interface (11), is configured to send the stored set of diagnostics data (23) via the network (3) in accordance with an OPC Unified Architecture, OPC UA, or Process Field Network, PROFINET, communication protocol.

8. An automation system (1) comprising:
a plurality of network devices (2, 5, 6);
a plurality of the I/O station (10) of any preceding claim; and
the network (3) via which the I/O stations (10) are communicatively connected to the network devices.

9. A method performed by the I/O station of any claim 1-7, the method comprising:
obtaining (S1) diagnostics data (23) relating to performance of the automation system (1);
storing (S2) the obtained (S1) diagnostics data as an entry in the set of diagnostics data (23) in the data storage (22);
from one of the network devices (2, 5, 6), receiving (S3) a request for the set of diagnostics data (23); and
in response to the received (S3) request, sending (S4) the set of diagnostics data (23), including the stored (S2) entry, to said one of the network devices.

10. The method of claim 9, wherein the diagnostics data which is stored (S2) as the entry in the set of diagnostics data (23) replaces previously stored diagnostics data in the set, thus updating the set of diagnostics data.

11. The method of claim 9 or 10, wherein the storing (S2) of the entry comprises associating a time stamp with the stored entry, the timestamp indicating a time when the diagnostics data of the entry was obtained (S1).

12. A computer program product (22) comprising computer-executable components (24) for causing an I/O station (10) to perform the method of any claim 9-11 when the computer-executable components are run on processing circuitry (25) comprised in the I/O station.
